(19) **Europäisches Patentamt**

**European Patent Office**

**Office européen des brevets**

(11) **EP 0 500 852 B2**

(12) **NEUE EUROPÄISCHE PATENTSCHRIFT**

(45) Veröffentlichungstag und Bekanntmachung des Hinweises auf die Entscheidung über den Einspruch:
**25.08.2004 Patentblatt 2004/35**

(45) Hinweis auf die Patenterteilung:
**24.04.1996 Patentblatt 1996/17**

(21) Anmeldenummer: **91915289.2**

(22) Anmeldetag: **31.08.1991**

(51) Int Cl.$^7$: **G05D 3/10**, G02B 21/24

(86) Internationale Anmeldenummer:
**PCT/DE1991/000691**

(87) Internationale Veröffentlichungsnummer:
**WO 1992/004666 (19.03.1992 Gazette 1992/07)**

(54) **POSITIONSSTEUERUNG**

POSITIONING CONTROL

COMMANDE DE POSITION

(84) Benannte Vertragsstaaten:
**CH DE FR GB LI**

(30) Priorität: **06.09.1990 DE 4028241**

(43) Veröffentlichungstag der Anmeldung:
**02.09.1992 Patentblatt 1992/36**

(73) Patentinhaber: **Leica Microsystems Wetzlar GmbH**
**35578 Wetzlar (DE)**

(72) Erfinder: **SCHALZ, Karl-Josef**
**D-6290 Weilburg (DE)**

(56) Entgegenhaltungen:
**EP-A- 0 066 159    DE-A- 3 330 476**
**DE-A1- 2 832 034    US-A- 3 681 620**
**US-A- 3 742 333    US-A- 4 695 137**

- **Carl Zeiss, D-7082 Oberkochen: "Gebrauchsanleitung Inspektionsmikroskop Zeiss-Axiotron AF mit Autofokussystem", Nr. G 42-380.2-d, 1988, 4 Blätter (Umschaltbarer Autofokus/Handradbedienung - siehe Beschreibung zu Bild 5 - Handrad 3)**
- **Carl Zeiss, D-7082 Oberkochen: "Operating Instructions Wafer Inspection Station WIS", Nr. G 42-382-e, 1986, Titelblatt und Seite 21 - siehe Page 21: Control Panel - manual focusing**
- **Ernst Leitz Wetzlar GmbH, Technische Service: "Leitz-LAF Serviceinformation" vom 13.02.1984, 4 Blätter, siehe Seiten c9.1 und c10.1**
- **Leitz, Anleitung "Leitz Scanningtisch 2000", 18.10.1985, Titelseite und Seiten 1, 2, 27-28**

EP 0 500 852 B2

## Beschreibung

Die Erfindung betrifft eine Positionssteuerung mit einem Gleichstrommotor, einem Untersetzungsgetriebe und einer Stromversorgungseinrichtung für Strompulse.

Derartige Positionssteuerungen sind bekannt. Der Betrieb mit Strompulsen ermöglicht kleinste mittlere Drehzahlen von Gleichstrommotoren.

Aus der DE-OS 33 30 476 ist eine Anordnung zur Steuerung einer Bewegung, insbesondere des Objekttisches oder des Fokussierantriebs, an einem Mikroskop bekannt. Es ist eine Handhabe mit einem proportionalen Geber vorgesehen und eine Schaltung, die abhängig von dessen Signalen einen Motor steuert.

Zur Vereinigung von Grob- und Feintrieb in einem System ist vorgesehen, daß die Schaltung die Gebersignale mit einem von der Gebergeschwindigkeit abhängigen Faktor multipliziert und so eine überproportionale Abhängigkeit der Ausgangsgeschwindigkeit von der Betätigungsgeschwindigkeit vorsieht. Als Motor ist ein Schrittmotor vorgesehen.

In der US-PS 4 695 137 ist ein motorisierter Antrieb für Fokuseinstellungen, Tischverschiebungen oder Objektivrevolverdrehungen an einem Mikroskop beschrieben. Die Steuerung des Motors für die Fokuseinstellung erfolgt über eine separate Kontrollkonsole mit einem Handrad oder Schalter. Das Handrad dient der Feinverstellung und der Schalter einer Schnellverstellung des Fokussierantriebs. Handrad und Schalter sind mit einem elektronischen Bit-Signalgenerator gekoppelt. Der Generator enthält einen Encoder und erzeugt zwei verschiedene digitale Impulszüge, deren Phasenlage zueinander von der Drehrichtung des Handrades abhängt. Die Impulszüge werden einer Motor-Steuereinrichtung zugeführt.

Eine solche Schaltung ist sehr aufwendig. Der dynamische Bereich eines Schrittmotors, begrenzt durch den kleinsten Drehschritt und die höchste Drehgeschwindigkeit mit unkomplizierter Impulsversorgung, ist gegenüber dem eines Gleichstrommotors eingeschränkt.

Aus Reuter, E. "Laufwagenpositionierung bei Druckern und Plottern" DE-Z. Feinwerktechnik + Meßtechnik 97 (1989), Nr. 10 S. 443-446 ist bekannt, daß zur Präzisionspositionierung vielfach gebrauchte "open Loop" Systeme mit Regelschleife vom Motor (Winkelgeber) zum Eingang der Ansteuer-Elektronik Toleranzen folgender mechanischer Glieder unberücksichtigt lassen.

Es ist die Aufgabe der Erfindung, eine gattungsgemäße Positionssteuerung anzugeben, die mit einfachen und preisgünstigen Komponenten, insbesondere einer einfachen elektronischen Schaltung, aufgebaut ist, und dabei eine Positionierbewegung mit großem dynamischen Bereich von kleinsten Schritten bis zu hoher Verfahrgeschwindigkeit erreicht. Linearbewegung vor- und rückwärts soll möglich sein. Die Einbindung in verschiedene automatisierte Funktionen und in geregelte Systeme soll möglich sein.

Die Positionssteuerung soll insbesondere für den Fokussiertrieb oder den Antrieb des Objekttisches eines Mikroskops geeignet sein.

Diese Aufgabe wird gelöst durch eine Positionssteuerung mit den Merkmalen der nebengeordneten Ansprüche 1 oder 5 . Mit den Merkmalen der abhängigen Ansprüche 2 bis 4 und 6 bis 14 ergeben sich vorteilhafte Weiterbildungen und Ausbildungen.

Die Erfindung wird anhand der Zeichnung erläutert.

Es zeigen:

Fig. 1   eine Übersicht über die Anordnung einer erfindungsgemäßen Positionssteuerung an einem Mikroskop

Fig. 2   a) den Verlauf der Strompulse und der Positioniergeschwindigkeit qualitativ für kleine Pulsfrequenzen
b) dito für Pulsfrequenzen oberhalb eines Schwellwerts
c) dito für große Pulsfrequenzen

Fig. 3   a) qualitativ ein Geschwindigkeits/Pulsfrequenz-Diagramm
b) quantitativ für ein Ausführungsbeispiel ein Diagramm entsprechend Fig. 3 a)

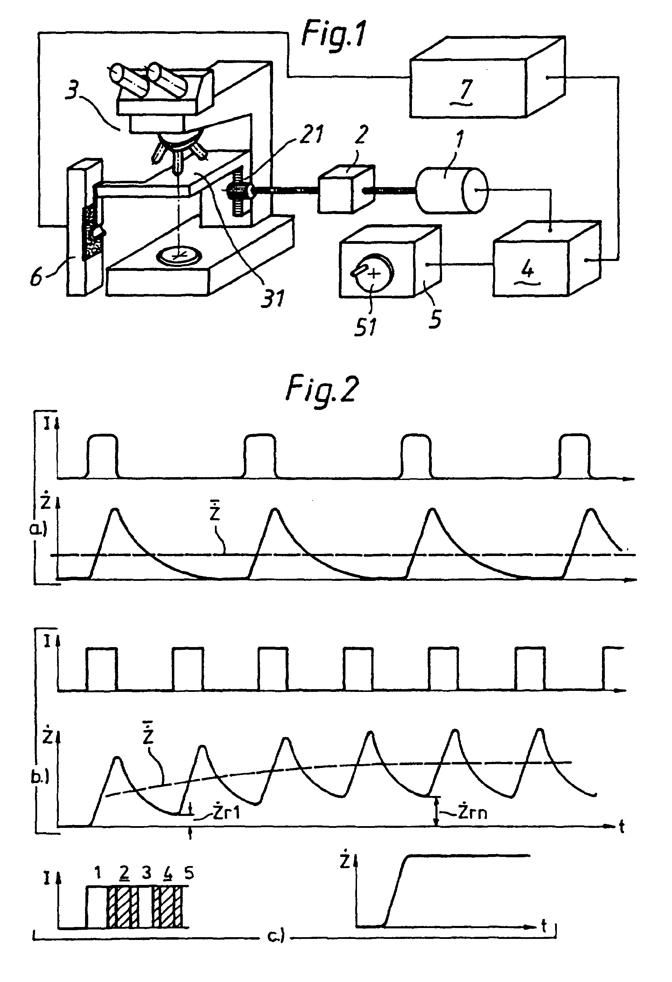

Die in Fig. 1 gegebene schematische Darstellung zeigt einen Gleichstrommotor 1, der in einem Ausführungsbeispiel ein eisenloser Glockenankermotor Fabrikat Faulhaber Typ 3557 C 012 ist, mit einem Untersetzungsgetriebe 2 und einer Ritzel/Zahnstange-Kombination 21 zur Erzeugung einer Hubbewegung angebaut an ein Mi-kroskop 3 mit einem Objekttisch 31, der damit höhenverstellbar ist.

Eine Stromversorgungseinrichtung 4 erzeugt Strompulse, die dem Motor 1 zugeführt werden, und wird gesteuert durch einen Winkelschrittgeber 5, welcher mit einem drehbaren Bedienungselement 51, z. B. einem Handrad oder einer Kurbel, verbunden ist. Die Elemente 6 und 7 werden weiter unten beschrieben und sind eine Option. Diese Anordnung wird wesentlich dadurch bestimmt, daß eine reine Steuerung vorliegt, also keine Rückkopplung vorgesehen ist. Eine Regelschleife wird erst über die Bedienungsperson über Auge und Hand hergestellt. Natürlich kann auch mit einem Autofokussystem ein Steuersignal erzeugt werden, welches die Stromversorgungseinrichtung 4 direkt steuert und so die Scharfstellung des Mikroskopbilds automatisiert. Die Positionssteuerung selbst (Teile 1, 2, 21, 3, 31, 4) enthält jedoch keine Regelschleife.

Wesentliche Besonderheit ist die Ausnutzung der Bremswirkung von Motor 1 und Getriebe 2 durch elektrodynamische und Reibungs-Effekte im Zusammenwirken mit der Ausbildung der Strompulse durch die Stromversorgungseinrichtung 4.

Dazu ist in Fig. 2 a) bis 2 c) qualitativ der zeitliche Verlauf der Strompulse zugeordnet dem zeitlichen Verlauf der Hubgeschwindigkeit z des Objekttischs 31 für verschiedene Pulsfolgefrequenzen $f_p$.

Die Form der Strompulse ist unabhängig von der Pulsfolgefrequenz $f_p$. Ihre Höhe wird vorteilhaft so gewählt, daß der zur Überwindung der Haftreibung erforderliche Strom um ein mehrfaches übertroffen wird.

Eine Flankenausrundung der Strompulse, z. B. mit einem Kondensator, ist insbesondere zur Geräuschminderung des Positionsantriebs sinnvoll.

Fig. 2 a) zeigt die Situation für kleine Pulsfrequenzen $f_p$.

Motor 1, Getriebe 2, 21 und Objekttisch 31 werden während jedes einzelnen Strompulses beschleunigt und nach dessen Ende wieder vollständig abgebremst, bevor ein neuer Strompuls folgt. Das Integral über den Geschwindigkeitspuls gibt also zu jedem Strompuls einen Bewegungsschritt bestimmter, wenn auch eventuell mit Schwankungen behafteter, Größe. Damit ist eine sehr feine Justierung möglich.

Überschreitet die Pulsfolgefrequenz $f_p$ die Schwelle, bei der der jeweils folgende Strompuls schon wieder kommt, bevor der Motor 1 stillsteht, (Restgeschwindigkeit $z_{r1} > o$) dann ergibt sich der in Fig. 2 b) skizzierte Verlauf.

Über mehrere Strompulse verläuft ein Anlaufvorgang, nach dem die Restgeschwindigkeit $\dot{z}_{rn}$ beim Einsetzen des neuen Strompulses deutlich größer als nach einem ersten Strompuls ist. Damit steigt in diesem Bereich die mittlere Geschwindigkeit $\dot{z}$ stärker mit der Pulsfolgefrequenz $f_p$ als im Fall der Figur 2 a).

Ohne irgendwelche Umschaltmittel und mit nur einem Eingabemittel, z. B. dem Handrad 51, erhält man so effektiv eine Schnellgang-Charakteristik zum Positionieren über größere Verstellwege.

Bei weiterem Erhöhen der Pulsfolgefrequenz $f_p$ verschwindet die Impulspause und es entsteht ein Gleichstrom, die Positioniereinheit läuft dann nach kurzer Anlaufphase mit Höchstgeschwindigkeit, wie in Fig. 2 c) dargestellt.

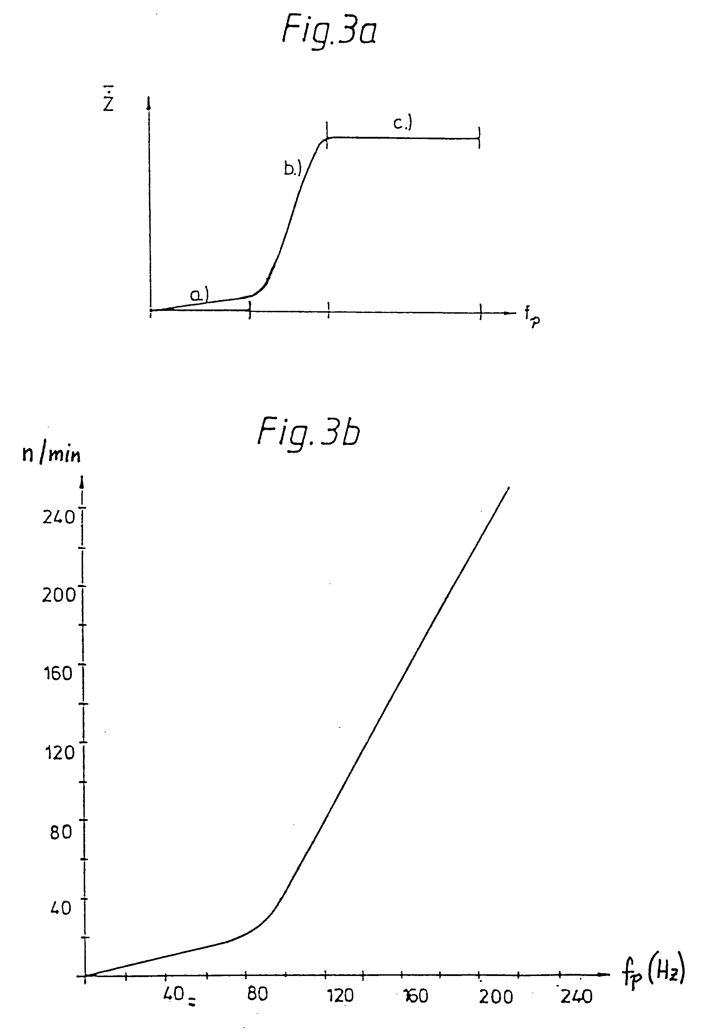

In Fig. 3 a) ist ebenfalls qualitativ die Geschwindigkeits/Pulsfolgefrequenz-Kennlinie $\dot{z}$ ($f_p$) für die gemäß Fig. 2 a) bis 2 c) beschriebene erfindungsgemäß genutzte Funktionsweise dargestellt.

Im Bereich a), entsprechend Fig. 2 a) und niedriger Frequenz $f_p$ ist die mittlere Geschwindigkeit $\bar{\dot{z}}$ mit kleinem Faktor m der Frequenz $f_p$ proportional.

In diesem Bereich kann daher über das Handrad 51 oder eine andere Ansteuerung der Stromversorgungseinrichtung 4 sehr feinfühlig positioniert werden.

Mit wenig höherer Drehgeschwindigkeit des Handrads 51 und damit Frequenz $f_p$ kommt man in den Bereich b) entsprechend Fig. 2 b) des steilen Anstiegs der Kennlinie und damit automatisch in eine Art "Schnellgang" der Positionssteuerung.

Bei ganz schneller Umdrehung bzw. Frequenz wird die Höchstgeschwindigkeit im Gleichstrombetrieb nach Fig. 2 c) erreicht, wie im Abschnitt c) dargestellt.

In einem Ausführungsbeispiel wird ein Glokkenanker-Gleichstrommotor (1) Fabrikat Faulhaber Typ 3557 C 012 mit Strompulsen von 1,5 A Amplitude und unter 1 ms Dauer beaufschlagt und wirkt über ein handelsübliches Zahnrad-Untersetzungsgetriebe (2) 250:1 und eine übliche Ritzel/Zahnstangenanordnung (21) auf die Höheneinstellung des Objekttisches (31) eines Mikroskops (3). Kleinste Hübe von 0,1 µm im Bereich a) und Verfahrgeschwindigkeiten von 8 mm/s im oberen Teil von Bereich b) werden damit erreicht.

Fig. 3 b) zeigt dazu eine gemessene Kennlinie Geschwindigkeit/ Pulsfolgefrequenz $f_p$, für die leicht meßbare Motordrehzahl n bestimmt. Im Bereich a) mit $f_p$ kleiner als 80 Hz ist der Proportionalitätsfaktor $m_a$ gleich 24 Umdrehungen in der Minute pro 100 Hz. Jeder Puls bewirkt 0,4 Umdrehungen.

Für höhere Pulsfolgefrequenzen $f_p$ im Bereich b) wächst die Motordrehzahl stärker an, oberhalb $f_p$ = 100 Hz wieder proportional mit einem Proportionalitätsfaktor $m_b$ gleich 200 Umdrehungen in der Minute pro 100 Hz, also eine Erhöhung auf das Achtfache.

Die Lage des Knicks in der Kennlinie kann konstruktiv beeinflußt werden über die Bremswirkung der Motor/Getriebe-Einheit (1,2) und auch im Betrieb verstellt werden durch Einstellung von Amplitude und Dauer der Strompulse der Stromversorgungseinrichtung 4, wodurch zugleich die Steilheit der Kennlinie in allen Bereichen verändert wird.

Dies kann zum Beispiel bei einem Mikroskop dazu ausgenutzt werden, die Steuercharakteristik den Schärfentiefenbereichen verschiedener Objektive anzupassen.

Eine ähnliche Anpassung erreicht man, wenn der Proportionalitätsfaktor zwischen Pulsfrequenz $f_p$ der Stromversorgungseinrichtung 4 und Winkelgeschwindigkeit des Bedienungselements 51 verstellbar ist, z. B. mittels Frequenzteiler.

Die bei einem Antrieb für lineare Positionierung erforderliche Vorwärts- und Rückwärtsbewegung wird unter Ausnutzung der Charakteristik des Gleichstrommotors 1 durch Umpolen erreicht, wozu in der Stromversorgungseinrichtung 4 eine Polwendeeinrichtung üblicher Art integriert ist, welche durch einen Drehrichtungssensor, der mit dem Winkelschrittgeber 5 in bekannter Weise vereinigt ist, gesteuert werden kann.

Eine einfache und kostengünstige Anordnung zum reproduzierbaren Positionieren auf eine frei wählbare Stellung erhält man, wenn bei einer erfindungsgemäßen Anordnung entlang des Verfahrwegs ein Potentiometer 6 angeordnet wird, so daß an diesem ein dem Verfahrweg proportionales Spannungsverhältnis abgegriffen werden kann.

Eine Vergleicherschaltung 7 enthält einen Speicher, in den der Wert dieses Spannungsverhältnisses eingelesen wird. Dann kann z. B. der Objekttisch 31 des Mikroskops 3 zu Manipulationen am Objekt vom Objektiv abgesenkt werden. Soll die ursprüngliche Stellung wieder angefahren werden, dann bildet die Vergleicherschaltung 7 ein Taktsignal mit einer Frequenz, die der Differenz zwischen dem aktuellen Spannungsverhältnis und dem gespeicherten Wert proportional ist. Dieses Taktsignal steuert die Stromversorgungseinrichtung 4.

Die erfindungsgemäße Charakteristik der Positionssteuerung bewirkt dann ein schnelles Verfahren bis in die Nähe der gewählten Stellung und dann ein langsames und sicheres Heranfahren an die genaue Stellung.

Es ist beachtlich, daß dabei an Linearität des Potentiometers 6, Stabilität der Spannungen, Schlupf oder Hysterese des Getriebes 2, 21 und des Motors 1 keine besonderen Anforderungen gestellt sind. Potentiometer 6 und Vergleicherschaltung 7 können auch die Funktion von Endschaltern zur Begrenzung des Verfahrwegs des Objekttisches 31 wahrnehmen.

Bei einem Mikroskop mit Fokusdetektor kann von diesem ein der Defokussierung entsprechendes Frequenzsignal abgeleitet und damit die Stromversorgungseinrichtung 4 gesteuert werden, so daß mit der erfindungsgemäßen Positionssteuerung ein Autofokussystem entsteht.

**Patentansprüche**

1. Positionssteuerung mit einem Gleichstrommotor (1), einem Untersetzungsgetriebe (2) und einer Stromversorgungseinrichtung (4) für Strompulse, **dadurch gekennzeichnet, daß** die Pulsfolgefrequenz $(f_p)$ verstellbar ist, Motor (1) und Getriebe (2) eine Bremswirkung haben und für kleine Pulsfrequenzen $(f_p)$ der Positionierantrieb nach jedem Strompuls bis zum Stillstand abgebremst ist, bevor ein nächster Strompuls folgt, wodurch die mittlere Geschwindigkeit $(\bar{z})$ am Getriebeausgang mit einem kleinen Proportionalitätsfaktor der Pulsfrequenz $(f_p)$ proportional ist; und daß für Pulsfrequenzen $(f_p)$ oberhalb eines Schwellwerts der Positionierantrieb zwischen zwei Strompulsen nicht völlig abgebremst wird, wodurch die mittlere Geschwindigkeit $(\bar{z})$ am Getriebeausgang mit der Pulsfolgefrequenz $(f_p)$ stark anwächst.

2. Positionssteuerung nach Anspruch 1, **dadurch gekennzeichnet, daß** die Pulsfrequenz $(f_p)$ der Stromversorgungseinrichtung (4) durch einen Winkelschrittgeber (5) gesteuert wird, welcher mit einem drehbaren Bedienungselement (51) gekoppelt ist, und daß die Pulsfrequenz $(f_p)$ der Winkelgeschwindigkeit des Bedienungselements (51) proportional ist.

3. Positionssteuerung nach Anspruch 1 oder Anspruch 2, **dadurch gekennzeichnet, daß** die Drehrichtung des Motors (1) durch Umpolen der Strompulse der Stromversorgungseinrichtung (4) geändert werden kann.

4. Positionssteuerung nach mindestens einem der Ansprüche 1 bis Anspruch 3, **dadurch gekennzeichnet, daß** die Polarität der Stromversorgungseinrichtung (4) von der Drehrichtung des Bedienungselements (51) bestimmt wird.

5. Positionssteuerung für die lineare Verschiebung eines Objekts (31) mit einem eine Bremswirkung aufweisenden Gleichstrommotor (1) und Getriebe (2, 21) zur Umwandlung von Dreh- in Linearbewegung,

   mit einer Stromversorgungseinrichtung (4) für Strompulse einer Pulsfrequenz, einer Amplitude und einer Pulsdauer,

   einer Polwendeeinrichtung,

   einem drehbaren Bedienungselement (51), gekoppelt mit einem Winkelschrittgeber (5) und einem Drehrichtungssensor,

   wobei durch den Winkelschrittgeber (5) die Pulsfrequenz der Stromversorgungseinrichtung (4) und durch den Drehrichtungssensor die Polarität der Polwendeeinrichtung bestimmt wird, and

   mit einer geknickten, von der Bremswirkung der Motor-/Getriebe-Einheit (1; 2; 21) und der Pulsfrequenz abhängigen Kennlinie der Bewegungsgeschwindigkeit des Objekts (31), die für kleine Pulsfrequenzen ein langsames proportionales Anwachsen der Geschwindigkeit und ab dem Bereich einer Schwelle der Pulsfrequenz ein deutlich stärkeres Zunehmen der Geschwindigkeit zeigt.

6. Positionssteuerung nach mindestens einem der Ansprüche 1 bis 5, **dadurch gekennzeichnet, daß** für große Pulsfrequenzen die Strompulse sich zu einem konstanten Gleichstrom überlagern, wodurch die mittlere Geschwindigkeit $(\bar{z})$ des Objekts (31) bei anwachsender Pulsfrequenz $(f_p)$ konstant bleibt.

7. Positionssteuerung nach mindestens einem der Ansprüche 1 bis Anspruch 6, **dadurch gekennzeichnet, daß** die Stromversorgungseinrichtung (4) Rechteck-Strompulse erzeugt und Kondensatoren zu deren Ausrundung vorgesehen sind.

8. Positionssteuerung nach mindestens einem der Ansprüche 1 bis Anspruch 7, **dadurch gekennzeichnet, daß** die Stromversorgungseinrichtung (4) Strompulse mit einer weit über dem zur Überwindung der Haftreibung von Motor (1) und Getriebe (2) erforderlichen Strom liegenden Amplitude erzeugt.

**9.** Positionssteuerung nach mindestens einem der Ansprüche 1 bis 8, **dadurch gekennzeichnet, daß** Amplitude und/oder Zeitdauer der Strompulse der Stromversorgungseinrichtung (4) verstellbar sind.

**10.** Positionssteuerung nach mindestens einem der Ansprüche 2 bis 9, **dadurch gekennzeichnet,, daß** der Proportionalitätsfaktor zwischen Pulsfrequenz ($f_p$) der Stromversorgungseinrichtung (4) und Winkelgeschwindigkeit des Bedienungselements (51) verstellbar ist.

**11.** Positionssteuerung nach mindestens einem der Ansprüche 1 bis 10, **dadurch gekennzeichnet, daß** das Getriebe (2, 21) eine Linearbewegung erzeugt, und daß ein einzelner Strompuls einen Bewegungsschritt kleiner als 1 µm bewirkt und die Geschwindigkeit für große Pulsfolgefrequenzen den Wert 1 mm/s überschreitet.

**12.** Positionssteuerung nach mindestens einem der Ansprüche 1 bis 11, **gekennzeichnet durch** die Kombination mit einem Positionsgeber und einem Schwellwertschalter, zur reproduzierbaren Positionierung an eine bestimmte Position.

**13.** Positionssteuerung nach mindestens einem der Ansprüche 1 bis 12, **gekennzeichnet durch** die Ausbildung als Fokussiertrieb oder Antrieb des Objekttisches (31) für ein Mikroskop (3).

**14.** Positionssteuerung nach Anspruch 13, **gekennzeichnet durch** die Verwendung als Stellantrieb in einem AutofokusRegelkreis.

**Claims**

**1.** Position control with a direct current motor (1), a step-down gear (2) and a current supply equipment (4) for current pulses, **characterised thereby**, that the pulse repetition frequency ($f_p$) is adjustable, the motor (1) and the gear (2) have a braking effect and the positioning drive is braked down to standstill after each current pulse for low pulse repetition frequencies ($f_p$) before a next current pulse follows, whereby the mean speed ($\bar{z}$) at the gear output is proportional to the pulse repetition frequency ($f_p$) by a low proportionality factor and that the positioning drive is not fully braked between two current pulses for pulse repetition frequencies ($f_p$) above a threshold value, whereby the mean speed ($\bar{z}$) at the gear output increases strongly with the pulse repetition

frequency ($f_p$).

**2.** Position control according to claim 1, **characterised thereby**, that the pulse repetition frequency ($f_p$) of the current supply equipment (4) is controlled by an angle step transmitter (5), which is coupled with a rotatable operating element (51), and that the pulse repetition frequency ($f_p$) is proportional to the angular speed of the operating element (51).

**3.** Position control according to claim 1 or claim 2, **characterised thereby**, that the rotational direction of the motor (1) can be changed by reversing the polarity of the current pulses of the current supply equipment (4).

**4.** Position control according to at least one of the claims 1 to 3, **characterised thereby**, that the polarity of the current supply equipment (4) is determined by the rotational direction of the operating element (51).

**5.** Position control for the linear displacement of an object (31) by a direct current motor (1), which displays a braking effect, and gear (2, 21) for the conversion of rotational into linear movement, with

a current supply equipment (4), for current pulses of a pulse frequency, an amplitude and a pulse duration,
a pole-reversing equipment,
a rotatable operating element (51) coupled with an angle step transmitter (5) and a rotational direction sensor,
wherein the pulse frequency of the current supply equipment (4) is determined by the angle step transmitter (5) and the polarity of the pole-reversing equipment is determined by the rotational angle sensor, and with
a kinked characteristic, which is dependent on the braking effect of the motor-gear unit (1; 2, 21) and the pulse frequency, of the speed of movement of the object (31), which exhibits a slow proportional growth in the speed for low pulse frequencies and a significantly greater increase in the speed above the region of a threshold of the pulse frequency.

**6.** Position control according to at least one of the claims 1 to 5, **characterised thereby**, that for high pulse frequencies, the current pulses merge into a continuous direct current, whereby the mean speed ($\bar{z}$) of the object (31) remains constant for increasing pulse frequency ($f_p$).

**7.** Position control according to at least one of the claims 1 to 6, **characterised thereby**, that the current supply equipment (4) generates rectangular current pulses and capacitors are provided for their round-ing-off.

8. Position control according to at least one of the claims 1 to 7, **characterised thereby**, that the current supply equipment (4) generates current pulses of an amplitude lying far above the current required for overcoming the static friction of the motor (1) and the gear (2).

9. Position control according to at least one of the claims 1 to 8, **characterised thereby**, that the amplitude and/or the time duration of the current pulses of the current supply equipment (4) is adjustable.

10. Position control according to at least one of the claims 2 to 9, **characterised thereby**, that the proportionality factor between the pulse frequency ($f_p$) of the current supply equipment (4) and the angular speed of the operating element (51) is adjustable.

11. Position control according to at least one of the claims 1 to 10, **characterised thereby**, that the gear (2,21) produces a linear movement and that a single current pulse produces a movement step of less than 1 micrometre and the speed for high pulse repetition frequencies ($f_p$) exceeds the value of 1 millimetre per second.

12. Position control according to at least one of the claims 1 to 11, **characterised by** the combination with a position transmitter and a threshold value switch for the reproducible positioning at a certain position.

13. Position control according to at least one of the claims 1 to 12, **characterised by** the construction as focussing drive or as drive of the object table (31) for a microscope (3).

14. Position control according to claim 13, **characterised by** the use as setting drive in an automatic focus-regulating loop.

**Revendications**

1. Commande de position avec un moteur à courant continu (1), un engrenage démultiplicateur (2) et un dispositif d'alimentation en courant (4) pour des impulsions de courant, **caractérisée en ce que** la fréquence de train d'impulsions ($f_p$) est réglable, le moteur (1) et l'engrenage (2) ont un effet de freinage et la commande de positionnement est freinée après chaque impulsion de courant jusqu'à l'arrêt, pour des faibles fréquences d'impulsions ($f_p$), avant que l'impulsion de courant suivante suive, grâce à quoi la vitesse moyenne ($\bar{z}$) à la sortie de l'engrenage est proportionnelle à la fréquence d'impulsions ($f_p$) avec un faible facteur de proportionnalité ; et **en ce que**, pour des fréquences d'impulsions ($f_p$) au-delà de la valeur de seuil, la commnde ou l'entraînement de positionnement n'est pas complètement freinée entre deux impulsions de courant, si bien que le vitesse moyenne $\bar{z}$ à la sortie de l'engrenage, augmente fortement avec la fréquence de train d'impulsions ($f_p$).

2. Commande de position selon la revendication 1, **caractérisée en ce que** la fréquence d'impulsions ($f_p$) du dispositif d'alimentation en courant (4) est commandée par un émetteur de pas angulaires (5) qui est relié à un élément de manipulation rotatif (51 ), et **en ce que** la fréquence d'impulsions ($f_p$) est proportionnelle à la vitesse angulaire de l'organe de manoeuvre (51).

3. Commande de position selon la revendication 1 ou la revendication 2, **caractérisée en ce que** la direction de rotation du moteur (1) est changée par inversion des impulsions de courant du dispositif d'alimentation en courant (4).

4. Commande de position selon au moins une des revendications 1 à 3, **caractérisée en ce que** la polarité du dispositif d'alimentation en courant (4) est déterminée par la direction de rotation de l'élément de manoeuvre (51).

5. Commande de position pour le déplacement linéaire d'un objet (31), avec un moteur à courant continu (1) ayant un effet de freinage et un engrenage (2, 21) pour la conversion d'un mouvement rotatif en un mouvement linéaire,

avec un dispositif d'alimentation en courant (4) pour des impulsions de courant d'une fréquence impulsions, d'une amplitude et d'une durée d'impulsion,
un dispositif commutateur ou inverseur de polarités,
un élément de manoeuvre rotatif (51) relié à un émetteur de pas angulaires (5) et un détecteur de direction de rotation,
par l'émetteur de pas angulaires (5) étant déterminée la fréquence d'impulsions du dispositif d'alimentation en courant (4) et par le détecteur de direction de rotation la polarité du dispositif commutateur ou inverseur de polarité, et avec une courbe caractéristique coudée et dépendant de l'effet de freinage de l'unité moteur/engrenage,(1,2,21) et de la fréquence d'impulsions, de la vitesse de déplacement de l'objet (31), qui,pour des faibles fréquences d'impulsions, fait état d'une augmentation lente proportionnelle de la vitesse et, à partir de la zone d'un seuil de la fréquence d'impulsions, d'une augmentation nettement plus forte de la vitesse.

6. Commande de position selon au moins une des revendications 1 à 5, **caractérisée en ce que**, pour des hautes fréquences d'impulsions, les impulsions de courant se superposent à un courant continu constant, si bien que la vitesse moyenne ($\bar{z}$) de l'objet (31) reste constante lors d'une fréquence d'impulsions ($f_p$) croissante.

7. Commande de position selon au moins une des revendications 1 à 6, **caractérisée en ce que** le dispositif d'alimentation en courant (4) produit des impulsions de courant rectangulaires et que des condensateurs pour l'arrondissement celles-ci sont prévus.

8. Commande de position selon au moins une des revendications 1 à 7, **caractérisée en ce que** le dispositif d'alimentation en courant (4) produit des impulsions de courant ayant une amplitude se situant largement au-dessus du courant nécessaire pour dépasser le frottement par adhérence du moteur (1) et de l'engrenage (2).

9. Commande de position selon au moins une des revendications 1 à 8, **caractérisée en ce que** l'amplitude et/ou la durée de temps des impulsions de courant du dispositif d'alimentation en courant (4) sont réglables.

10. Commande de position selon au moins une des revendications 2 à 9, **caractérisée en ce que** le facteur de proportionnalité entre la fréquence d'impulsions ($f_p$) du dispositif d'alimentation en courant (4) et la vitesse angulaire de l'élément de manoeuvre (51) est réglable.

11. Commande de position selon au moins une des revendications 1 à 10, **caractérisée en ce que** l'engrenage (2, 21) produit un déplacement linéaire et **en ce qu'**une seule impulsion de courant produit un pas de déplacement inférieur à 1 μm et la vitesse pour des fréquences de train d'impulsions élevées dépasse la valeur de 1 mm/s.

12. Commende de position selon au moins une des revendications 1 à 11, **caractérisée par** la combinaison avec un générateur de positions et un commutateur de valeur de seuil, pour le positionnement reproductible dans une position prédéterminée.

13. Commande de position selon au moins une des revendications 1 à 12, **caractérisée par** la configuration de l'entraînement de focalisation ou de l'entraînement de la table d'objet (31) pour un microscope (3).

14. Commande de position selon la revendication 13, **caractérisée par** l'utilisation comme entraînement de réglage dans une boucle de réglage d'auto-focalisation.

Fig.1

Fig.2

# Fig.3a

# Fig.3b